# EUROPÄISCHE PATENTSCHRIFT

(11) **EP 2 683 570 B1**
(45) Veröffentlichungstag und Bekanntmachung des Hinweises auf die Patenterteilung: **17.09.2014**
(21) Anmeldenummer: 12720824.7
(22) Anmeldetag: 20.04.2012
(51) Int. Cl.: B60L 5/40

(54) **HALTERUNG FÜR EINEN DATENLEITER, ENERGIEÜBERTRAGUNGSSYSTEM UND DATENÜBERTRAGUNGSSYSTEM**
MOUNTING FOR A DATA CONDUCTOR, ENERGY TRANSMISSION SYSTEM AND DATA TRANSMISSION SYSTEM
ATTACHE POUR UN CONDUCTEUR DE DONNÉES, SYSTÈME DE TRANSMISSION D'ÉNERGIE ET SYSTÈME DE TRANSMISSION DE DONNÉES

(30) Priorität: 21.04.2011 DE 102011002239
(43) Veröffentlichungstag der Anmeldung: 15.01.2014
(73) Patentinhaber: Conductix-Wampfler GmbH, 79576 Weil am Rhein-Märkt (DE)
(72) Erfinder: MAIER, Bernd, 79418 Schliengen (DE); PIETSCHMANN, Frank, 79689 Maulburg (DE)
(74) Vertreter: Charrier, Rapp & Liebau
(86) Internationale Anmeldenummer: PCT/EP2012/057261
(87) Internationale Veröffentlichungsnummer: WO 2012/143506

(56) Entgegenhaltungen:
- EP-B1- 0 814 994
- WO-A2-2007/090500
- DE-A1- 3 300 202
- DE-A1- 10 347 851
- JP-U- S6 143 702
- JP-U- S6 221 702
- JP-U- S6 324 902
- US-A- 4 375 193

## Beschreibung

Die Erfindung betrifft eine Halterung für einen Datenleiter an einem Leiterstrang einer Schleifleitung, ein Energieübertragungssystem nach dem Oberbegriff des Anspruchs 15 und ein Datenübertragungssystem nach dem Oberbegriff des Anspruchs 18.

Bei bekannten, als Schleifleitungssystem ausgebildeten Energieübertragungssystemen fährt ein elektrischer Verbraucher entlang einer Schleifleitung und nimmt über einen Stromabnehmer von einem oder mehreren Schleifleitungssträngen Strom ab. Um zusätzlich für die Steuerung des Fahrzeugs, beispielsweise eines Kranes, Steuerdaten übertragen zu können, werden üblicherweise entlang der Schleifleitung eigene Datenleitungen angeordnet. Beispielsweise werden eigene Datenleitungen entlang der Schleifleitung angeordnet, in die eine Antenne eingreift, welche über einen zusätzlichen Mitnehmer des Fahrzeugs mit dem Fahrzeug verfährt. Die Datenübertragung erfolgt dabei üblicherweise nur lokal begrenzt auf den Bereich der Datenleiter, in dem die Antenne sich gerade bewegt. Andere berührungslose Fern-Datenübertragungen, beispielsweise Funkübertragung, mit einer zentralen Sendeantenne und an den Fahrzeugen angeordneten Empfängern, bei denen also der Abstand zwischen zentraler Sendeantenne und den einzelnen Empfängern von einigen 10 bis über hundert Meter beträgt, können aus unterschiedlichen Gründen nicht eingesetzt werden. So kommt es bei den hohen übertragenen Strömen und Spannungen und der Verwendung von hochgetakteten Umrichtern bei solchen Schleifleitungen oft zu übertragungsbedingten Störungen solcher Funkübertragungen. Im Stand der Technik wird deshalb bei solchen Energieübertragungssystemen eine lokal begrenzte berührungslose Datenübertragung zwischen Schleifleitung und Fahrzeug verwendet, welche einen geringe räumlich Nähe zwischen Antenne und Empfänger im Zentimeterbereich erfordert.

Die bekannten Anlagen erfordern in der Regel eine zusätzliche, aufwändige Schienenkonstruktion mit einer komplett eigenen Halterung für den Datenleiter, welche von den eigentlichen Schleifleitungen entfernt angebracht werden muss. Auch ist dann ein eigener Mitnehmerwagen notwendig, an dem der Empfänger des verfahrbaren Verbrauchers angeordnet ist.

Um diesen Nachteil zu überwinden, sieht die DE 10 2004 008 571 A1, welche eine Tragschiene mit einer Lauffläche für ein schienengebundenes Fahrzeug aufweist, vor einen Schlitzhohlleiter in die Tragschiene zu integrieren. Dabei weist das Tragschienenprofil einen sich längs der Tragschiene erstreckenden geschlitzten Hohlraum auf, wobei durch den Schlitz eine an einem Fahrzeug angeordnete Antenne in den Hohlraum elektromagnetische Wellen ein- oder auskoppeln kann. Diese Ausführung weist zwar eine kompakte Bauweise auf, allerdings ist eine Auf- oder Nachrüstung einer bestehenden Anlage oder ein Austausch eines defekten Schlitzhohlleiters aufgrund des in die Tragschiene integrierten Schlitzhohlleiters nicht möglich.

Die WO 2007/090500 A1 offenbart ein Transportsystem mit einem Schienensystem und darauf bewegbar angeordnete Wagen, wobei am Schienensystem ein Primärleitersystem vorgesehen ist, an das zumindest eine vom jeweiligen Wagen umfasste Sekundärspule induktiv zur berührungslosen Übertragung elektrischer Leistung und/oder Information gekoppelt ist. Das stationäre Schienensystem weist dabei Halteelemente für die Primärleiter auf, welche in ein Grundhalteprofil eingeklippst sind. Weiter kann in das Grundhalteprofil ein geschlitzter Koaxialleiter über ein weiteres Halteprofil eingeklippst werden, der zur Datenübertragung geeignet ausgeführt ist, wobei die Wagen jeweils zumindest eine Antenne umfassen, welche entlang diesem Koaxialleiter geführt wird. Diese Ausführung ist montagetechnisch aufwendig, und insbesondere muss bereits im Grundhalteprofil eine Haltemöglichkeit für das Halteprofil des Koaxialleiters vorgesehen werden. Eine einfache und nachträgliche Montage eines Koaxialleiters ist dort nicht ohne weiteres möglich.

Die DE 103 47 851 A1 offenbart eine Vorrichtung, mit der elektrische Energie von einem Energiekabel, das entlang einer stationären Schiene eines Bewegungssystems verlegt ist, auf ein entlang der Schiene verfahrbares bewegliches Element übertragen werden kann, wobei ein Übertragungskopf des beweglichen Elements mit dem Energiekabel induktiv zusammenwirkt. Das Energiekabel ist mittels eines sich im wesentlichen entlang der Schiene erstreckenden und an dieser lösbar befestigten Tragprofils angebracht. Unmittelbar neben dem Energiekabel ist wird mittels des gleichen Tragprofils ein Datenkabel eines Datenbusses gehalten. Nachteilig dabei ist unter anderem, dass das Datenkabel nicht in einer Entfernung und nicht separat zum Energiekabel montiert werden kann.

Die DE 33 00 202 A1 betrifft Fahrdrahtanlage für eine Einschienenhängebahn im Steinkohlebergbau, bei der parallel zum Schienenstrang der Hängebahn ein geschlitztes, den Fahrdraht aufnehmendes Fahrdrahtführungsrohr vorgesehen ist, in den ein an der Hängebahn angeordneter Stromabnehmerschleifkopf eingreift. Eine zusätzliche Datenübertragungseinheit ist dort nicht vorgesehen.

Die US 4,375,193 betrifft eine Einschienenhängebahn mit vier parallel zur Fahrstrecke verlaufenden Schleifleitungen für Schleifkontakte eines Einschienenfahrzeugs. Dabei werden drei der vier Schleifleitungen zur Energieübertragung verwendet, während die vierte Schleifleitung zur kontaktbehafteten Übertragung von Steuersignalen eingesetzt wird. Dies führt zu den bekannten Problemen bei der kontaktbehafteten Datenübertragung.

Die JP 62-21702 betrifft eine Schleifleitung bei einer ortsfesten Krananlage, wobei dort ein Datenübertragungsmodul fest an der Schiene für die elektrischen Kontaktschienen befestigt ist. Eine lösbare Halterung für das Datenübertragungsmodul ist dort nicht offenbart.

Die JP 43702 betrifft eine Schleifleitung einer Einschienenhängebahn mit zwei parallel zueinander geführten Stromabnehmern.

Die JP 63 24902 betrifft eine Schleifleitung einer Einschienenhängebahn mit einem Stromabnehmer mit einer fest daran angeordneten Datenantenne, die parallel zu einer Stromschiene für die Datenübertragung geführt ist. Eine lösbare Halterung für das die Datenantenne ist dort nicht offenbart.

Das EP 0 814 994 B1 betrifft ein spurgeführtes Transportsystem mit induktiver Energieübertragung, u.a. von einem E-förmigen Primärleiter auf einen U-förmigen Sekundärleiter und dient als vorteilhafter Ersatz von Systemen, bei denen die Energie über Schleifkontakte zugeführt wird. Dort ist u.a. eine Ausführungsform beschrieben, bei der ein äußeres U-Profil des Primärleiters zur induktiven Energieübertragung gleichzeitig als Tragelement für ein Koaxialkabel für die Informationsübertragung benutzt wird. Ein mit dem Koaxialkabel fest verbundener Fuß ist dort jedoch nur in einem kleinen Teilbereich mit dem Primärleiter verbunden.

Die DE 33 11 362 C1 betrifft eine Schleifleitungsanordnung mit parallel zueinander liegenden Schleifleitungen, welche auf einem gemeinsamen Halter befestigt und an einer Tragschiene der Schleifleitungsanordnung angebracht sind. Die Halterung weist dabei einen Haltearm und einen Klapparm auf, welche über eine Soll-Biegestelle nach Art eines Filmscharnieres klappbar miteinander verbunden und in Arbeitsstellung der Soll-Biegestelle über eine dem Haltearm zugeordnete Haltenase und eine dem Klapparm zugeordnete Halteklaue zusätzlich gesichert sind. Eine zusätzliche Halterung für eine Schleifleitung ist dort nicht vorgesehen.

Aufgabe der Erfindung ist es deshalb, eine Halterung für einen Datenleiter an einer Schleifleitung, ein Energieübertragungssystem und ein Datenübertragungssystem bereitzustellen, welche die oben genannten Nachteile überwinden und eine kompakte Bauweise, eine einfache, schnelle Ausrüstung und Nachrüstung eines Energieübertragungssystems sowie eine zuverlässige Datenübertragung ermöglichen.

Diese Aufgabe löst die Erfindung durch eine Halterung für einen Datenleiter an einer Schleifleitung mit den Merkmalen des Anspruchs 1, ein Energieübertragungssystem mit den Merkmalen des Anspruchs 15 und ein Datenübertragungssystem mit den Merkmalen des Anspruchs 18. Vorteilhafte Weiterbildungen und bevorzugte Ausgestaltungen der Erfindung sind in den Unteransprüchen angegeben.

Die erfindungsgemäße Halterung für einen Datenleiter an einem Leiterstrang einer Schleifleitung weist ein an eine Außenkontur des Leiterstrangs angepasstes Haltemittel zur Befestigung der Halterung am Leiterstrang und ein Befestigungsmittel zum Befestigen des Datenleiters an der Halterung im Abstand zum Leiterstrang auf. Hierdurch kann der Datenleiter in stets gleich bleibendem Abstand zu Leiterstrang gehalten werden, wobei er Änderungen der Ausrichtung des Leiterstrangs nachvollziehen kann.

Bevorzugt kann das Haltemittel eine Fixiervorrichtung zum Fixieren der Halterung an dem Leiterstrang aufweist, wodurch eine zusätzlich Fixierung des Haltemittels gewährleistet wird.

In einer montagetechnisch vorteilhaften Ausgestaltung kann das Befestigungsmittel eine Aufnahme mit einem an die Außenkontur des Datenleiters oder eines den Datenleiter umgebenden Datenleiterprofils angepassten Aufnahmeraum bzw. Innenkontur aufweisen.

Um ein schnelles und einfaches Einsetzen und Herausnehmen des Datenleiters oder des Datenleiterprofils in die Aufnahme zu ermöglichen, können in einer offenen Seite des Aufnahmeraums Schnapphaken zum Einschnappen und Halten des Datenleiters oder des Datenleiterprofils vorgesehen sein.

Vorteilhaft kann auf einer der offenen Seite des Aufnahmeraums gegenüberliegenden Seite der Aufnahme mindestens eine durch die Halterung reichende Fixierschraube zum Festlegen des Datenleiters oder Datenleiterprofils an den Schnapphaken vorgesehen sein.

In einer vorteilhaften Ausführung kann das Datenleiterprofil aus zwei den Datenleiter zum Teil umgreifenden länglichen, miteinander verrastbaren Profilhälften besteht.

In einer vorteilhaften Ausführung der Erfindung kann das Befestigungsmittel auf einer dem Leiterstrang abgewandten Seite unmittelbar am Haltemittel angeordnet sein, so dass eine besonders platzsparende Ausbildung möglich ist. Bevorzugt kann in diesem Fall bei einem erfindungsgemäßen Energieübertragungssystem der Datenleiter mittels der Halterung an einem Stromabnehmer, insbesondere bezüglich weiterer Stromabnehmer eines Stromabnehmerwagens äußeren Stromabnehmer angeordnet sein, und die Antenne kann am Stromabnehmerwagen angeordnet sein.

Das erfindungsgemäße Energieübertragungssystem ist dadurch gekennzeichnet, dass eine Vielzahl von an der Schleifleitung in deren Längsrichtung voneinander beabstandet angeordneten oben und nachfolgend beschriebenen erfindungsgemäßen Halterungen den Datenleiter im Abstand zur Schleifleitung halten.

In einer vorteilhaften Ausgestaltung des Energieübertragungssystems können eine weitere Vielzahl von an der Schleifleitung in deren Längsrichtung voneinander beabstandet angeordneten oben und nachfolgend beschriebenen erfindungsgemäßen Halterungen einen weiteren Datenleiter im Abstand zur Schleifleitung halten, wobei eine weitere Antenne an dem Verbraucher angeordnet ist.

Vorteilhaft können die Halterungen den Datenleiter in einem im wesentlichen gleich bleibenden horizontalen und/oder vertikalen Abstand von der Schleifleitung, insbesondere einem äußeren Leitungsstrang halten, wobei hierdurch ebenso sichergestellt wird, dass der Datenleiter und die Antenne quer zur Längsrichtung der Schleifleitung und des Leitungsstrangs relativ zueinander in der gleichen Position verbleiben.

Vorteilhaft können mehrere oder alle Halterungen an einem einzelnen Leiterstrang; insbesondere bezüglich weiterer Leiterstränge der Schleifleitung äußeren Leiterstrang der Schleifleitung angeordnet sein, wobei in einer entsprechenden vorteilhaften Ausgestaltung die Antenne an einem Stromabnehmer, insbesondere bezüglich weiterer Stromabnehmer eines Stromabnehmerwagens äußeren Stromabnehmer angeordnet sein kann.

In einer vorteilhaften Ausgestaltung kann der Teil des Stromabnehmers, an dem die Antenne angeordnet ist, in vertikaler Richtung gegenüber der Schleifleitung und dem Verbraucher beweglich an dem Verbraucher gelagert sein, wobei ein Mittel zum Bewegen des Stromabnehmers in Richtung der Schleifleitung vorgesehen ist. Das Mittel kann z.B. eine Feder sein, die diesen Teil des Stromabnehmers vom Verbraucher bzw. einem Stromabnehmerwagen weg zur Schleifleitung drückt. Hierdurch lassen sich vorteilhaft Höhenverschiebungen des Leiterstrangs gegenüber der Schleifleitung zusätzlich ausgleichen.

Das erfindungsgemäße Datenübertragungssystem ist gekennzeichnet durch eine Vielzahl von oben und nachfolgend beschriebenen erfindungsgemäßen Halterungen zum Halten des Datenleiters in einem gleich bleibendem Abstand zu einem Leiterstrang der Schleifleitung.

Die Erfindung wird nun anhand eines Ausführungsbeispiels mit Bezug auf die begleitenden Zeichnungen beschrieben. Diese zeigen:
- Fig. 1: eine schematische, dreidimensionale Ansicht eines Teils eines erfindungsgemäßen elektrischen Energieübertragungssystems mit einem erfindungsgemäßen Datenübertragungssystem und einer erfindungsgemäßen Halterung;
- Fig. 2: eine teilgeschnittene, schematische Draufsicht auf das Energieübertragungssystem aus Fig. 1 von in Fig. 1 schräg rechts hinten;
- Fig. 3: eine Detailansicht auf das erfindungsgemäße Datenübertragungssystem des Energieübertragungssystem aus Fig. 2;
- Fig. 4: einen Schnitt durch eine erfindungsgemäße Halterung;
- Fig. 5: einen Schnitt durch die Halterung aus Fig. 4 entlang der Linie A-A;
- Fig. 6: die Ansicht der Halterung aus Fig. 4 an einem Isolierprofil der Schleifleitung und mit einem in ein Tragprofil eingesetzten Datenleiter;
- Fig. 7: ein schematischer explodierter Schnitt durch das Tragprofil mit Datenleiter aus Fig. 6;
- Fig. 8: eine alternative Ausgestaltung des Datenübertragungssystems;
- Fig. 9: eine schematische, dreidimensionale Ansicht eines Teils eines alternativen erfindungsgemäßen elektrischen Energieübertragungssystems mit einem alternativen erfindungsgemäßen Datenübertragungssystem und einer alternativen erfindungsgemäßen Halterung;
- Fig. 10: einen Schnitt durch die alternative erfindungsgemäße Halterung aus Fig. 9;
- Fig. 11: einen Schnitt durch die Halterung aus Fig. 10 entlang der Linie B-B;

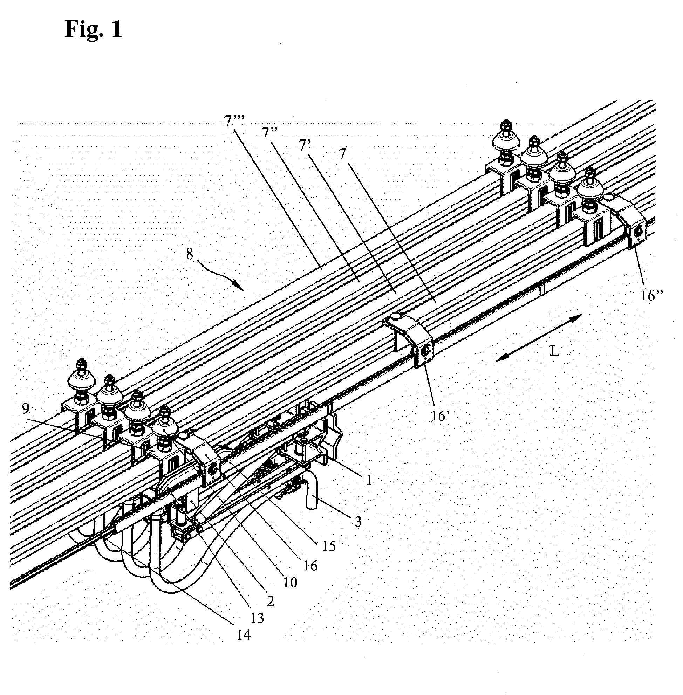

In Fig. 1 ist ein erfindungsgemäßes Energieübertragungssystem gezeigt, wie es beispielsweise zur Versorgung eines nicht gezeichneten, als Containerstapelkran ausgebildeten verfahrbaren elektrischen Verbrauchers mit elektrischer Energie verwendet wird.

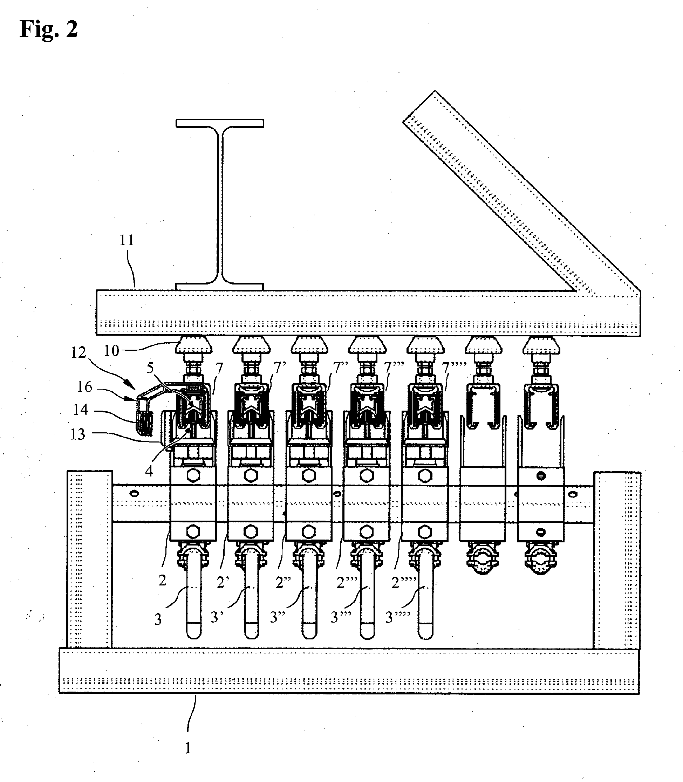

Hierzu ist am Kran ein in Fig. 1 und 2 nur schematisch angedeuteter Stromabnehmerwagen 1 montiert. Am Stromabnehmerwagen 1 sind fünf weitgehend identisch ausgebildete Stromabnehmer 2, 2', 2", 2"', 2"" etc. befestigt, weshalb im weiteren vor allem der Stromabnehmer 2 beschrieben wird. Die Aussagen hierzu gelten entsprechend auch für die anderen Stromabnehmer 2 - 2"" etc., sofern nicht anders angegeben.

Der Stromabnehmer 2 versorgt in an sich bekannter Weise über ein Leitungskabel 3 elektrische Verbraucher des Fahrzeugs mit elektrischer Energie. Hierzu wird ein Gleitstück 4 mittels Federkraft nach oben gegen einen in einem Leiterprofil 5 gehaltenen elektrischen Leiter 5a gedrückt. Alternativ kann auch das Leiterprofil 5 elektrisch leitend ausgebildet sein. Im Normalbetrieb steht der Leiter 5a unter Spannung, so dass ein Strom vom Leiter 5a auf das Gleitstück 4 übertragen wird. Üblicherweise sind mehrere Stromabnehmer 2 - 2"" etc. zur elektrischen Energieversorgung der elektrischen Verbraucher vorgesehen, während einer der Stromabnehmer zur Erdung des Fahrzeugs in einem Leiterprofil gehaltenen Erdungsleiter eingreift.

Zur weiteren elektrischen Isolierung und zum Schutz gegen äußere Einwirkungen ist das Leiterprofil 5 in ein Isolierprofil 6 eingesetzt. Leiterprofil 5 und Isolierprofil 6 bilden einen länglichen Leiterstrang 7, der mit mehreren parallel zueinander verlaufenden, im wesentlichen identisch ausgebildeten Leiterstränge 7', 7", 7"', 7"" eine Schleifleitung 8 bilden. Aus Gründen der einfacheren Darstellung sind in Fig. 1 nur die vier Leiterstränge 7, 7', 7", 7"' aus Fig. 2 gezeigt. Der Leiterstrang 7 wird von einem das Isolierprofil 6 umgreifenden Isolierprofilträger 9 eines Befestigungselements 10 an einem nur in Fig. 2 gezeigten Tragholm 11 befestigt. Die weiteren Leiterstränge 7', 7", 7"', 7"" sind wie oben beschrieben entsprechend am Tragholm 11 befestigt. Wie aus Fig. 1 hervorgeht, sind die Leiterstränge 7, 7', 7",7"',7"" in regelmäßigen Abständen entsprechenden Tragholmen an der Schleifleitung 8 befestigt.

Die oben beschriebenen Bestandteile des Energieübertragungssystems sind dem Fachmann in Ausbildung und Funktion an sich bekannt und bedürfen keiner weiteren Erläuterung.

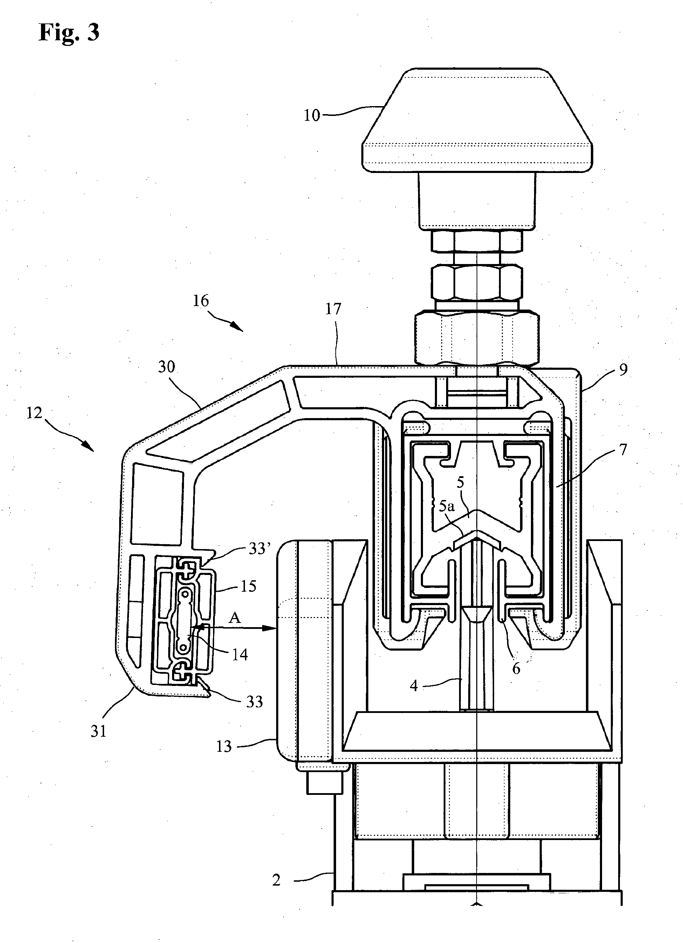

Zur Übertragung von Daten zwischen Fahrzeug und Energieübertragungssystem, z.B. Steuerdaten für das Fahrzeug oder Energieanforderungsdaten vom Fahrzeug an das Energieübertragungssystem, ist ein Datenübertragungssystem 12 vorgesehen. Das Datenübertragungssystem 12 weist eine Antenne 13 auf, welche bevorzugt auf der Außenseite des in Fig. 2 ganz linken außenseitigen Stromabnehmers 2 montiert ist, welcher in Fig. 3 im Detail gezeigt ist. Hierdurch kann die Antenne 13 direkt vom Stromabnehmerwagen 1 mitgeführt werden und es ergibt sich ein kompakter Aufbau. Die Antenne 13 ist über nicht gezeigte Leitungen mit einer Datenauswerteeinheit des Fahrzeugs verbunden.

Als Gegenstück zur Antenne 13 ist ein Datenleiter 14 vorgesehen, der von einem zweiteiligen Datenleiterprofil 15 aus Kunststoff umgeben ist. Das Datenleiterprofil 15 dient als Schutz, Haltemittel und zur Isolierung des Datenleiters 14. Der Datenleiter 14 ist mit einer Datenübertragungseinheit des Energieübertragungssystems verbunden.

Um eine sichere, gegen äußere Störungen unempfindliche, aber dennoch energiesparende Datenübertragung zwischen Antenne 13 und Datenleiter 14 zu ermöglichen, ist der Datenleiter 14 mittels einer erfindungsgemäßen Halterung 16 in geringem Abstand A von der Antenne 13 an dem zum Stromabnehmer 2 korrespondierenden Leiterstrang 7 befestigt. Wie in Fig. 1 erkennbar, ist die Halterung 16 in Längsrichtung L unmittelbar neben dem Befestigungselement 10 am Leiterstrang 7 angeordnet. Längs des Leiterstrangs 7 halten in regelmäßigen Längsabständen weitere erfindungsgemäße Halterungen 16', 16" den Datenleiter 13 im Datenleiterprofil 15 in weitgehend gleichbleibendem Abstand A zum Leiterstrang 7. Geringe, fertigungs- und montagebedingte Abweichungen sind deutlich kleiner als der Abstand A. Somit ist sichergestellt, dass die Antenne 13 stets in weitgehend gleichbleibendem seitlichen Abstand A am Datenleiter 14 vorbeigeführt wird. Denn durch die Befestigung der Halterungen 16, 16', 16" direkt am Leiterstrang 7 werden evtl. Krümmungen oder ein Durchhängen des Leiterstrangs 7 zwischen den Tragholmen 11 vom Datenleiter 14 nachvollzogen und somit ausgeglichen. Ebenso wird durch die Halterungen 16, 16', 16" etc. auch sichergestellt, dass der Datenleiter 14 in vertikaler Richtung in weitgehend gleichbleibender Höhe bezüglich des Leiterstrangs 7 geführt wird. Da die Antenne 13 vorteilhaft an dem Teil des Stromabnehmers 2 gelagert ist, der zum Leiter 5a hin gedrückt wird, bleiben Antenne13 und Datenleiter 14 auch in vertikaler Richtung weitgehend unverändert zueinander ausgerichtet. Insbesondere werden auch durch das Andrücken des Gleitstücks 4 an den Leiter 5a hervorgerufenen Höhenverschiebungen des Leiterstrangs 7 durch die direkt am Leiterstrang 7 befestigten Halterungen 16, 16', 16" etc. nachvollzogen und somit ausgeglichen. Die Antenne 13 und der Datenleiter 14 verbleiben somit quer zur Längsrichtung L relativ zueinander in der gleichen Position.

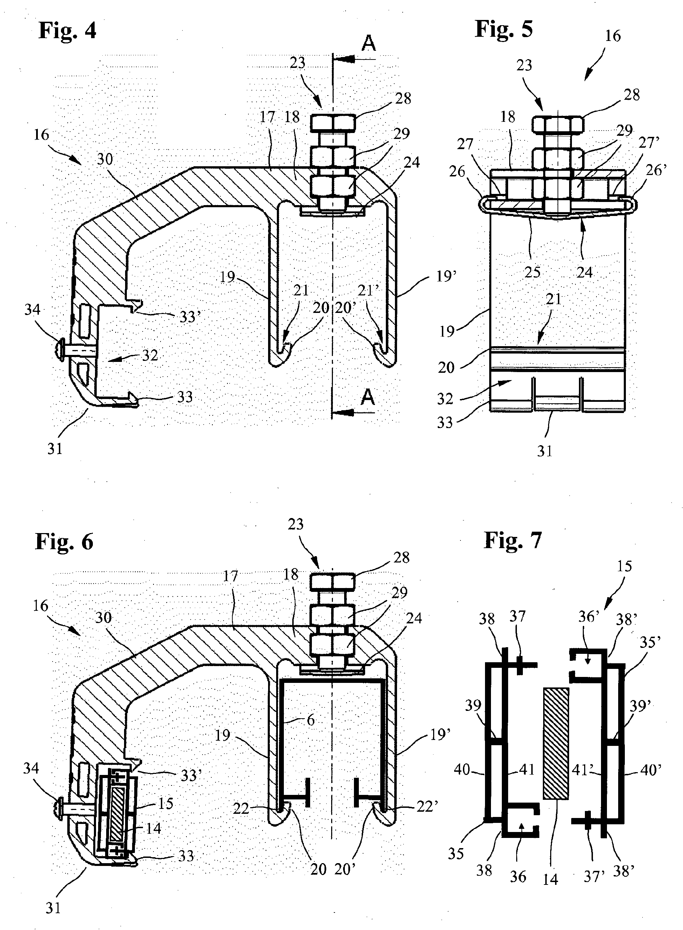

Die Halterung 16 wird nun im Detail vor allem anhand von Fig. 4 bis 6 erläutert. Die Halterung 16 weist den in Fig. 4 und 6 gezeigten Querschnitt auf, wobei aus Gründen der einfacheren Darstellung die Halterung 16 als Vollprofilschnitt gezeichnet ist. Die Halterung 16 kann vorteilhaft aus Kunststoff oder einem anderen, in gewissen Grenzen nachgiebigen, formstabilen Material gefertigt sein. Sie kann vorteilhaft aus einem Hohlprofilmaterial wie in Fig. 2 und 3 gezeichnet oder einem Vollmaterial wie in Fig. 3 gezeichnet bestehen.

Ein Halteabschnitt 17 der Halterung 16 weist zur Befestigung am Leiterstrang 7 zwei von einem Mittelabschnitt 18 ausgehende, voneinander beabstandete, einander gegenüberliegende elastische, aber dennoch formstabile Halteschenkel 19, 19' mit einander zugewandten, zum Mittelabschnitt 18 hin weisenden Rastnasen 20, 20' mit zugehörigen Rastnuten 21, 21' an ihren vorderen, freien Enden auf. Zum Befestigen der Halterung 16 am Leiterstrang 7 wird der Halteabschnitt 17 von in Fig. 6 oben auf das in Fig. 6 nur schematisch gezeichnete Isolierprofil 6 aufgesteckt, wobei die Halteschenkel 19, 19' dabei seitlich weggedrückt werden. Ist der Halteabschnitt 17 ganz auf das Isolierprofil 6 aufgesetzt, schnappen die Rastnasen 20, 20' über entsprechende Rastschenkel 22, 22' am vorderen, freien, in Fig. 6 unteren Ende des Isolierprofils 6 ein.

Die Halteschenkel 19, 19' sind vorteilhaft etwas länger als Seitenwände des im wesentlichen U-förmigen Isolierprofils 6 ausgebildet, und auch der Innenabstand zwischen den beiden Halteschenkeln 19, 19' ist vorteilhaft etwas größer als der Außenabstand der Seitenwände des Isolierprofils 6. Der von dem Mittelabschnitt 18 und den Halteschenkeln 19, 19' umgebene Raum und die hierdurch definierte Innenkontur des Halteabschnitts 17 ist somit an die Außenkontur des Isolierprofils 6 angepasst. Hierdurch kann insbesondere bei nur kleinen Unterschieden zwischen der Innenkontur des Halteabschnitts 17 und der Außenkontur des Isolierprofils 6 ein sicherer Sitz der Halterung 16 auf dem Isolierprofil 6 sichergestellt werden.

Zusätzlich kann zur weiteren Verbesserung des Sitzes der Halterung 16 auf dem Isolierprofil 6 eine Feststellvorrichtung 23 an dem in Fig. 4 bis 6 oberen Bereich des Halteabschnitts 17 vorgesehen werden. Die Feststellvorrichtung 23 weist ein in Fig. 5 gut erkennbares Klemmblech 24 mit einem im unbelasteten Zustand flachen Klemmabschnitt 25 auf. An in Fig. 5 rechten und linken Enden 26, 26' ist das Klemmblech 24 um jeweils rund 180° umgebogen und greift in Rastschlitze 27, 27' des Halteabschnitts 17 ein, so dass das Klemmblech 24 nicht ohne weiteres entfernt werden kann. In unbelastetem Zustand liegt der Klemmabschnitt 25 bündig am Mittelabschnitt 18 des Halteabschnitts 17 an. Weiter ist am Halteabschnitt 17 eine Klemmschraube 28 vorgesehen, welche über am Halteabschnitt 17 befestigte Haltemuttern 29 in Richtung des Klemmblechs 24 geschraubt werden kann. Hierdurch kann, wie in Fig. 6 erkennbar, das Klemmblech 24 von oben gegen das Isolierprofil 6 gedrückt werden, wodurch die Rastnasen 20, 20' der Halteschenkel 19, 19' zu den Rastschenkeln 22, 22' des Isolierprofils 6 hin und somit die Rastschenkel 22, 22' fest in die Rastnuten 21, 21' gezogen werden, so dass die Halterung 16 zusätzlich am Isolierprofil 6 schnell und einfach festgelegt werden kann.

Vom Halteabschnitt 17 verläuft ein Auslegerarm 30 der Halterung 16 seitlich und quer zur Längsrichtung L zu einem Datenleitertragabschnitt 31. Der Auslegerarm 30 hat vorliegend einen abgeschrägten Bereich, der in den Datenleitertragabschnitt 31 übergeht. Ebenso können aber auch andere Gestaltungen für die Halterung 16 gewählt werden, welche sicherstellen, dass der Datenleiter 14 in einem gewünschten Abstand vom Leiterstrang 7 gehalten wird.

Der Datenleitertragabschnitt 31 weist eine dem Halteabschnitt 17 zugewandten Aufnahme 32 für das Datenleiterprofil 15 des Datenleiters 14 auf, wobei das Datenleiterprofil 15 aus Fig. 2 und 3 in Fig. 6 und 7 lediglich schematisch dargestellt ist. Die Aufnahme 32 weist hierzu vorteilhaft eine an die Außenkontur des Datenleiterprofils 15 angepasste Innenkontur mit U-förmigem Querschnitt auf. An der offenen Seite der Aufnahme 32 sind Schnapphaken 33, 33' vorgesehen, welche das Datenleiterprofil 15 sicher in der Aufnahme 32 halten. Da die Schnapphaken 33, 33' in gewissem Umfang elastisch zur Seite gedrückt werden können, kann das in Fig. 6 gut erkennbare Datenleiterprofil 15 einfach und schnell in die Aufnahme 32 eingeklippt werden. Die Aufnahme 32 stellt somit einen sicheren Sitz des Datenleiterprofils 15 an der Halterung 16 bereit. Wie insbesondere aus Fig. 5 hervorgeht, kann der untere Schnapphaken 33 in Längsrichtung L auch unterteilt sein, wobei ein mittlerer Teil des Schnapphakens gegenüber den neben ihm liegenden Teilen geringfügig nach oben versetzt ist. Hierdurch kann das Datenleiterprofil 15 leichter in die Aufnahme eingeklippt und wieder herausgenommen werden. Alternativ oder zusätzlich kann auch der obere Schnapphaken 33' vorteilhaft entsprechend oder gegenläufig unterteilt sein.

Um das Datenleiterprofil 15 zusätzlich in der Aufnahme 32 sichern zu können, ist eine Fixierschraube 34 vorgesehen, welche durch eine im Bereich der Aufnahme 32 durch den Datenleitertragabschnitt 31 reichende Gewindebohrung geschraubt werden kann. Hierdurch wird das Datenleiterprofil 15 von der in Fig. 6 linken Seite nach rechts gegen die Schnapphaken 33, 33' gedrückt und liegt dort fest an.

Um den Datenleiter 14 einfach in das Datenleiterprofil 15 einsetzen zu können, weist das Datenleiterprofil 15 vorteilhaft die in Fig. 7 im Querschnitt schematisch gezeigte Struktur aus identisch ausgebildeten länglichen Profilhälften 35, 35' auf. Dabei ist jeweils an einem Ende der Profilhälften 35, 35' ein Rastraum 36, 36' vorgesehen, in welchen ein Rastkreuz 37, 37' des anderen, gegenüberliegenden Endes der Profilhälften 35, 35' eingeführt und darin verrastet werden kann. Hierzu sind die Querbalken der Rastkreuze 37, 37' etwas breiter als die Öffnungen der Rasträume 36, 36' ausgebildet. Da die Profilhälften 35, 35' aus einem in gewissem Umfang elastischen Material, z.B. Kunststoff bestehen, können die Profilhälften 35, 35' somit einfach zusammengeklippt werden, wobei der Datenleiter zwischen den Profilhälften 35, 35' zu liegen kommt und dort bündig gehalten wird. Weiter weisen die Profilhälften 35, 35' Anschläge 38, 38' auf, welche zum Verrasten mit den Schnapphaken 32, 32' der Aufnahme 32 vorgesehen sind. Stege 39, 39' sind zur Stabilisierung zwischen Längsschenkeln 40, 41 bzw. 40', 41' vorgesehen, um das Datenleiterprofil 15 sicher mit der Fixierschraube 34 gegen die Schnapphaken 32, 32' drücken zu können.

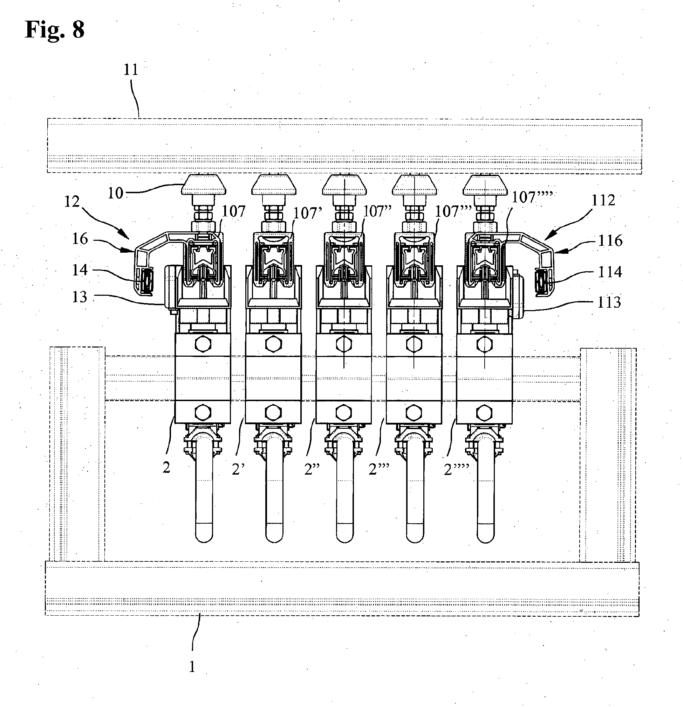

Fig. 8 zeigt eine andere Ausgestaltung eines erfindungsgemäßen Energieübertragungssystems, welche weitgehend mit dem oben beschriebenen Energieübertragungssystem übereinstimmt. Für gleiche Teile werden deshalb gleiche Bezugszeichen verwendet und im nachfolgenden im wesentlichen die Unterschiede der beiden Ausgestaltungen beschrieben.

Das alternative Energieübertragungssystem unterscheidet sich zum einen durch die Anzahl von Leitersträngen 107, 107', 107", 107"' und 107"" von der Ausgestaltung nach Fig. 2, wobei dies für den Fachmann eine übliche Ausgestaltung ist. Zur vorteilhaften Erhöhung der Datenübertragungsrate ist hier aber zusätzlich zum Datenübertragungssystem 12 an dem in Fig. 8 linken Leiterstrang 107 ein weiteres, entsprechend ausgebildetes Datenübertragungssystem 112 auf der in Fig. 8 ganz rechten Außenseite angeordnet. Hierzu ist eine weitere Antenne 113 an einer Außenseite eines Stromabnehmers 102 befestigt, während ein weiterer Datenleiter 114 über eine erfindungsgemäße Halterung 116 an dem äußeren Leiterstrang 107"" befestigt ist. Wie oben beschrieben, ist der Datenleiter 114 über weitere erfindungsgemäße Halterungen längs der Schleifleitung 8 am äußeren Leiterstrang 107"" gehalten, wobei die gesamte Anordnung des Datenübertragungssystems 112 lediglich seitenverkehrt zu dem linken Datenübertragungssystem 12 angeordnet ist.

Durch die erfindungsgemäße Halterung 16 kann der Datenleiter 14 einfach und sicher in einem vorgegebenen Abstand vom Leiterstrang 7 und somit von der Antenne 13 des Stromabnehmerwagens 1 gehalten werden. Eine aufwändige Schienenkonstruktion für den Datenleiter mit einem Mitnehmer oder anderen zusätzlichen Bauteilen ist somit nicht mehr notwendig. Zudem kann eine bereits bestehende Schleifleitung 8 einfach nachgerüstet werden und ein defekter oder abgenutzter Datenleiter 14 einfach ausgetauscht werden. Dadurch, dass der Datenleiter 14 im vorgegebenen Abstand vom Leiterstrang 7 gehalten wird und die Streckenführung des Leiterstrangs 7 nachvollzieht, kann aufgrund des nur in sehr geringem Grad schwankenden Abstands zwischen Antenne 13 und Datenleiter 14 eine sehr zuverlässige, verbrauchsarme Datenübertragung sichergestellt werden. Trotz der einfachen Austauschbarkeit der Datenleitung 14 ergibt sich ein kompakter Aufbau der Schleifleitung 8 wie auch des Stromabnehmerwagens 2.

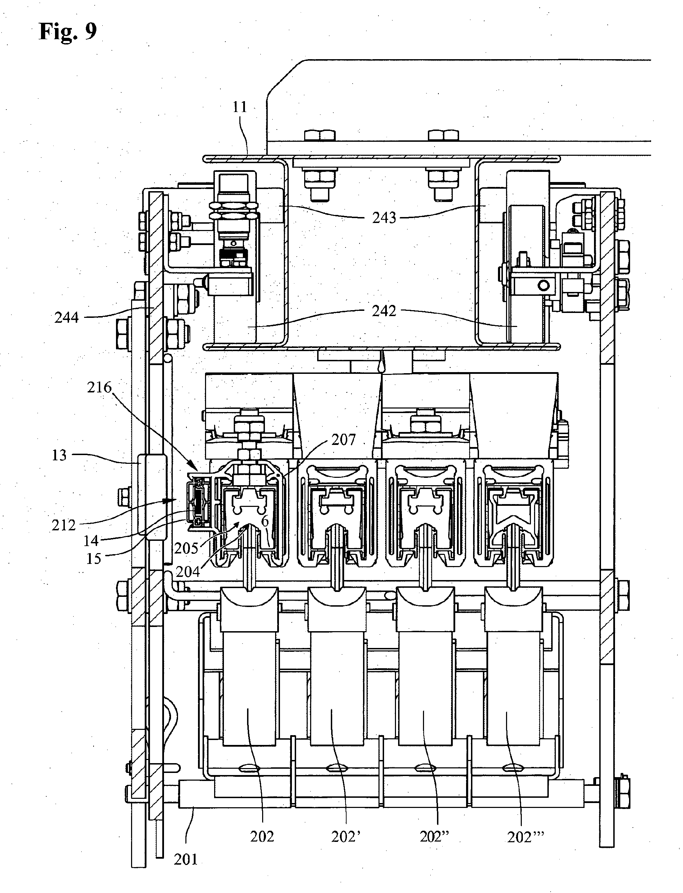

Fig. 9 zeigt eine schematische, dreidimensionale Ansicht eines Teils eines alternativen erfindungsgemäßen elektrischen Energieübertragungssystems mit einem alternativen erfindungsgemäßen Datenübertragungssystem und einer alternativen erfindungsgemäßen Halterung, welches im wesentlichen der Ausführung nach Fig. 1 bis 7 entspricht. Entsprechende Teile werden deshalb gleich bezeichnet und mit gleichen Bezugszeichen versehen.

Ein in Fig. 9 schematisch angedeuteter Stromabnehmerwagen 201 weist in an sich bekannter Weise weitgehend identisch ausgebildete Stromabnehmer 202, 202', 202 ", 202'" auf, weshalb im weiteren vor allem der Stromabnehmer 202 beschrieben wird. Die Aussagen hierzu gelten entsprechend auch für die anderen Stromabnehmer 202 - 202'" etc., sofern nicht anders angegeben. Der Stromabnehmer 202 versorgt in an sich bekannter Weise elektrische Verbraucher des Fahrzeugs mit elektrischer Energie. Hierzu wird wie bei der in Fig. 1 bis 7 beschriebenen Ausführung ein Gleitstück 204 mittels Federkraft nach oben gegen ein elektrisch leitendes Leiterprofil 205 gedrückt.

Zur weiteren elektrischen Isolierung und zum Schutz gegen äußere Einwirkungen ist das Leiterprofil 205 in ein Isolierprofil 206 eingesetzt, welche gemeinsam wieder einen länglichen Leiterstrang 207 bilden. Neben diesem liegende, im wesentlichen identisch ausgebildete Leiterstränge sind in Fig. 9 aus Gründen der einfacheren Darstellung nicht extra bezeichnet. Der Leiterstrang 7 und die anderen Leiterstränge werden über einen Tragholm 211 am Fahrzeug respektive Kran befestigt. Im Tragholm 211 laufen auch Tragrollen 242 und Führungsrollen 243 des Stromabnehmerwagens 201 in an sich bekannter Weise. Die oben beschriebenen Bestandteile des Energieübertragungssystems sind dem Fachmann in Ausbildung und Funktion an sich bekannt und bedürfen keiner weiteren Erläuterung.

Im Gegensatz zu der in Fig. 1 bis 7 gezeigten Ausführung ist bei der in Fig. 9 gezeigten alternativen Ausführung der Erfindung ein Datenübertragungssystem 212 vorgesehen, bei dem die Antenne 13 nicht an einem der Stromabnehmer 202 - 202"', sondern an einem Rahmen 244 des Stromabnehmerwagens 201 befestigt ist. Als Gegenstück zur Antenne 13 ist wieder der Datenleiter 14 vorgesehen, der von dem zweiteiligen Datenleiterprofil 15 aus Kunststoff umgeben ist.

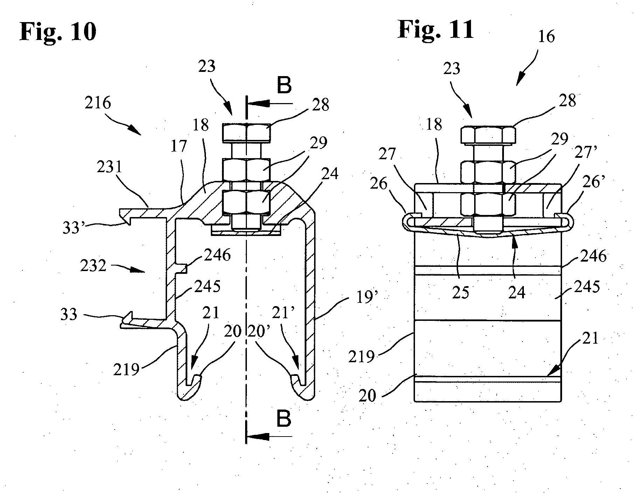

Das Datenleiterprofil 15 mit dem Datenleiter 14 wird hier mittels einer alternativen erfindungsgemäßen Halterung 216 in geringem Abstand von der Antenne 13 an dem zum Stromabnehmer 202 korrespondierenden Leiterstrang 207 befestigt. Die Halterung 216 entspricht in vielen Teilen der Halterung 6 aus Fig. 4 und 5, so dass nachfolgend vor allem die Unterschiede anhand von Fig. 10 und 11 erläutert werden. Gleiche Teile tragen wieder die gleichen Bezeichnungen und die gleichen Bezugszeichen, so dass auf eine detaillierte Beschreibung dieser Teile wie zu Fig. 4 und 5 bereits geschehen, an dieser Stelle verzichtet werden kann.

Von der Halterung 6 unterscheidet sich die Halterung 216 vor allem dadurch, dass das Datenträgerprofil 15 nicht über einen Auslegerarm 30 beabstandet vom Leiterstrang 207 gehalten wird, sondern direkt auf einer dem Halteschenkel 19' abgewandten Seite eines formstabilen Halteschenkels 219 der Halterung 216 angebracht ist.

Um die Halterung 216 am Leiterstrang 207 zu befestigen, weist der Halteschenkel 219 ebenso wie der Halteschenkel 19 aus Fig. 4 eine zum Mittelabschnitt 18 hin weisende Rastnasen 20 mit zugehöriger Rastnut 21 an seinem vorderen, freien Ende auf. Die Halterung 216 kann deshalb ebenso wie die Halterung 16 aus Fig. 4 am Leiterstrang 207 aufgesteckt werden. Auch hier kann vorteilhaft zusätzlich zur weiteren Verbesserung des Sitzes der Halterung 216 auf dem Isolierprofil 6 eine in Fig. 4 bis 6 ausführlich beschriebene Feststellvorrichtung 23 vorgesehen werden.

Im Gegensatz zu der Ausführung nach Fig. 4 weist der Halteschenkel 219 jedoch auf seiner Außenseite den in Fig. 4 und 6 gezeigten Datenleitertragabschnitt 31 mit einer Aufnahme 232 auf. Bei der Ausführung nach Fig. 9 bis 11 ist die Aufnahme 232 für das Datenleiterprofil 15 des Datenleiters 14 jedoch nach außen und vom Halteabschnitt 17 abgewandt. Ansonsten unterscheidet sich die Aufnahme 232 lediglich dadurch von der in Aufnahme 32 aus Fig. 4 und 6, dass hier keine Fixierschraube 34 vorgesehen ist.

Um die Stabilität der Aufnahme 232 und insbesondere ihres Bodens 245 zu gewährleisten, ist auf der dem Schenkel 19' zugewandten Seite des Schenkels 219 im Bereich des Bodens 245 mindestens ein Steg 246 vorgesehen, welcher in Längsrichtung L des Leiterstrangs 207 verläuft. Dieser Steg 246 wird insbesondere beim Einsetzen des Datenleiterprofils 15 in die Aufnahme 232 gegen das Isolierprofil 6 mit Leiterprofil 5 gedrückt, so dass der Boden 245 der Aufnahme 232 kaum durchgedrückt wird. Anstelle eines Stegs 246 können auch mehrer Stege oder andere Versteifungen des Bodens vorgesehen werden, beispielsweise ein durchgehend dickerer Boden oder Längs- und Querstege. Die in Fig. 10 dargestellt Ausführung weist den Vorteil auf, dass der Boden 245 zumindest geringfügig nachgeben kann, so dass die die Schnapphaken 33, 33' tragenden Schenkel der Aufnahme 232 beim Einsetzen des Datenleiterprofils 15 leichter nachgeben können und nicht so stark beansprucht werden, wie es bei einem dickeren und/oder steiferen Boden 245 der Fall wäre.

Die in Fig. 9 bis 11 beschriebene alternative Ausführung der Halterung weist den Vorteil einer sehr kompakten Bauweise auf, bei der kein auskragender Auslegerarm 30 der Halterung 16 vorgesehen werden muss. Gerade bei sehr schmal bauenden Stromabnehmersystemen kann somit immer noch ein erfindungsgemäßes Datenübertragungssystem 212 eingesetzt werden. Auch lässt sich das Datenleiterprofil 15 mit Datenleiter 14 bei dieser Ausführung einfach von außen in die Aufnahme 232 der Halterung 216 einsetzen, so dass ein einfache Montage und Demontage des Datenleiterprofil 15 mit Datenleiter 14 ermöglicht werden kann und eine Beschädigung des Auslegerarms 30 der Halterung 16 vermieden werden kann.

## Patentansprüche

1. Halterung (16; 116; 216) für einen Datenleiter (14; 114) an einem Leiterstrang (7; 117; 207) einer Schleifleitung (8) mit einem an eine Außenkontur des Leiterstrangs (7; 117; 207) angepassten Haltemittel zur Befestigung der Halterung (16; 116; 216) am Leiterstrang (7; 117; 207) und einem Befestigungsmittel zum Befestigen des Datenleiters (14; 114) an der Halterung (16; 116; 216) im Abstand zum Leiterstrang (7; 117; 207).

2. Halterung (16; 116; 216) nach Anspruch 1, **dadurch gekennzeichnet, dass** das Haltemittel eine Fixiervorrichtung (23) zum Fixieren der Halterung (16; 116; 216) an dem Leiterstrang (7; 117; 207) aufweist.

3. Halterung (16; 116; 216) nach Anspruch 1 oder **2, dadurch gekennzeichnet, dass** das Haltemittel zum Umfassen des Leiterstrangs (7) von einem Mittelabschnitt (18) ausgehende, einander gegenüberliegende Halteschenkel (19, 19'; 219) mit Rastmitteln (20, 20', 21, 21') an ihren freien Enden aufweisen.

4. Halterung (16; 116; 216) nach Anspruch 3, **dadurch gekennzeichnet, dass** die Rastmittel (20, 20', 21, 21') zum Mittelabschnitt (18) weisende, einander zugewandte Rastnasen (20, 20') mit Rastnuten (21, 21') sind.

5. Halterung (16; 116; 216) nach einem der Ansprüche 3 oder 4, **dadurch gekennzeichnet, dass** im Mittelabschnitt (18) an der Halterung (16; 216) ein Klemmblech (24) mit einem Klemmabschnitt (25) angeordnet ist, der mittels einer an der Halterung (16; 116; 216) angeordneten Klemmschraube (28) in Richtung der Rastmittel (20, 20', 21, 21') bewegbar ist.

6. Halterung (16; 116; 216) nach einem der voranstehenden Ansprüche, **dadurch gekennzeichnet, dass** das Befestigungsmittel eine Aufnahme (32; 232) mit einem an die Außenkontur des Datenleiters (14; 114) oder eines den Datenleiter (14; 114) umgebenden Datenleiterprofils (15) angepassten Aufnahmeraum aufweist.

7. Halterung (16; 116; 216) nach Anspruch 6, **dadurch gekennzeichnet, dass** auf einer zum Einsetzen des Datenleiters (14; 114) oder des Datenleiterprofils (15) offenen Seite des Aufnahmeraums Schnapphaken (33, 33') zum Einschnappen und Halten des Datenleiters (14) oder des Datenleiterprofils (15) vorgesehen sind.

8. Halterung (16; 116; 216) nach Anspruch 7, **dadurch gekennzeichnet, dass** auf einer der offenen Seite des Aufnahmeraums gegenüberliegenden Seite mindestens eine durch die Halterung (16; 116; 216) reichende Fixierschraube (34) zum Festlegen des Datenleiters (14; 114) oder Datenleiterprofils (15) an den Schnapphaken (33, 33') vorgesehen ist.

9. Halterung (16; 116; 216) nach einem der Ansprüche 6 bis 8, **dadurch gekennzeichnet, dass** der Datenleiter (14; 114) oder das Datenleiterprofil (15) Anschläge (38, 38') zur Anlage an den Schnapphaken (33, 33') aufweist.

10. Halterung (16; 116; 216) nach einem der Ansprüche 6 bis 9, **dadurch gekennzeichnet, dass** das Datenleiterprofil (15) aus zwei den Datenleiter (14; 114) zum Teil umgreifenden länglichen, miteinander verrastbaren Profilhälften (35, 35') besteht.

11. Halterung (16; 116) nach einem der Ansprüche 1 bis 10, **dadurch gekennzeichnet, dass** sie einen Auslegerarm (30) aufweist, der das Befestigungsmittel in gleichbleibendem Abstand zum Haltemittel hält.

12. Halterung (216) nach einem der voranstehenden Ansprüche 1 bis 10, **dadurch gekennzeichnet, dass** das Befestigungsmittel (232) auf einer dem Leiterstrang (207) abgewandten Seite unmittelbar am Haltemittel angeordnet ist,

13. Halterung (216) nach Anspruch 12, **dadurch gekennzeichnet, dass** das Haltemittel zumindest nach einem der Ansprüche 3 oder 4 ausgebildet ist und einer der Halteschenkel (219) auf seiner dem Leiterstrang (207) abgewandten Seite ein nach einem der Ansprüche 6 bis 8 ausgebildetes Befestigungselement (232) aufweist.

14. Halterung (216) nach Anspruch 13, **dadurch gekennzeichnet, dass** der Halteschenkel (219) auf seiner dem Leiterstrang (207) zugewandten Seite im Bereich des Befestigungselements (232) eine Versteifung, insbesondere einen Steg (246) aufweist.

15. Energieübertragungssystem zur Übertragung elektrischer Energie zwischen einer Schleifleitung (8) und einem entlang der Schleifleitung (8) bewegbaren elektrischen Verbraucher mit mindestens einem entlang der Schleifleitung (8) geführten Datenleiter (14; 114) und mindestens einer an dem Verbraucher angeordneten Antenne (13; 113), **dadurch gekennzeichnet, dass** eine Vielzahl von an der Schleifleitung (8) in deren Längsrichtung (L) voneinander beabstandet angeordneten Halterungen (16, 16', 16"; 116; 216) nach einem der Ansprüche 1 bis 14 den Datenleiter (14; 114) im Abstand zur Schleifleitung (8) halten.

16. Energieübertragungssystem nach Anspruch 15, **dadurch gekennzeichnet, dass** die Halterungen (16, 16', 16"; 116; 216) den Datenleiter (14; 114) in einem im wesentlichen gleich bleibenden horizontalen und/oder vertikalen Abstand von der Schleifleitung (8) halten.

17. Energieübertragungssystem nach einem der Ansprüche 15 oder 16, **dadurch gekennzeichnet, dass** der Stromabnehmer (2; 2"") dem einzelnen Leiterstrang (7; 107"") zugeordnet ist.

18. Datenübertragungssystem zur berührungslosen lokalen Datenübertragung zwischen mindestens einem längs einer Schleifleitung (8) geführten Datenleiter (14; 114) und mindestens einer an einem entlang der Schleifleitung (8) bewegbaren elektrischen Verbraucher angeordneten Antenne (13; 113), **dadurch gekennzeichnet, dass** es eine Vielzahl von Halterungen (16, 16', 16"; 116; 216) nach einem der Ansprüche 1 bis 14 zum Halten des Datenleiters (14; 114) in einem gleich bleibendem Abstand zu einem Leiterstrang (7) der Schleifleitung (8) aufweist.

## Claims

1. Mounting (16; 116; 216) for a data conductor (14; 114) on a phase conductor (7; 117; 207) of a contact line (8) with a holding means matched to an external contour of the phase conductor (7; 117; 207) for fastening the mounting (16; 116; 216) to the phase conductor (7; 117; 207) and a fastening means for fastening the data conductor (14; 114) to the mounting (16; 116; 216) a distance from the phase conductor (7; 117; 207).

2. Mounting (16; 116; 216) according to claim 1, **characterised in that** the holding means exhibits a fixing device (23) for fixing the mounting (16; 116; 216) to the phase conductor (7; 117; 207).

3. Mounting (16; 116; 216) according to claim 1 or 2, **characterised in that** the holding means exhibits holding limbs (19, 19'; 219) for embracing the phase conductor (7) which face one another and extend from a central portion (18) and have locking means (20, 20', 21, 21') at their free ends.

4. Mounting (16; 116; 216) according to claim 3, **characterised in that** the locking means (20, 20', 21, 21') are locking projections (20, 20') which face one another and point towards the central portion (18) and have locking grooves (21, 21').

5. Mounting (16; 116; 216) according to one of claims 3 or 4, **characterised in that** arranged in the central portion (18) on the mounting (16; 216) there is a clamping plate (24) with a clamping portion (25) which can be moved in the direction of the locking means (20, 20', 21, 21') by means of a clamping screw (28) arranged on the mounting (16; 116; 216).

6. Mounting (16; 116; 216) according to one of the preceding claims, **characterised in that** the fastening means exhibits a receiving opening (32; 232) with a receiving chamber matched to the external contour of the data conductor (14; 114) or of a data conductor profile (15) surrounding the data conductor (14; 114).

7. Mounting (16; 116; 216) according to claim 6, **characterised in that** snap hooks (33, 33') for snap engagement and holding the data conductor (14) or the data conductor profile (15) are provided on a side of the receiving chamber which is open for insertion of the data conductor (14; 114) or the data conductor profile (15).

8. Mounting (16; 116; 216) according to claim 7, **characterised in that** provided on an opposite side to the open side of the receiving chamber there is at least one fixing screw (34) passing through the mounting (16; 116; 216) to secure the data conductor (14; 114) or data conductor profile (15) to the snap hooks (33, 33').

9. Mounting (16; 116; 216) according to one of claims 6 to 8, **characterised in that** the data conductor (14; 114) or the data conductor profile (15) exhibits stops (38, 38') for bearing on the snap hooks (33, 33').

10. Mounting (16; 116; 216) according to one of claims 6 to 9, **characterised in that** the data conductor profile (15) consists of two elongated profile halves (35, 35') which partly embrace the data conductor (14; 114) and can be locked together.

11. Mounting (16; 116) according to one of claims 1 to 10, **characterised in that** it exhibits an outrigger arm (30) which holds the fastening means a constant distance from the holding means.

12. Mounting (216) according to one of the preceding claims 1 to 10, **characterised in that** the fastening means (232) is arranged directly on the holding means on a side remote from the phase conductor (207).

13. Mounting (216) according to claim 12, **characterised in that** the holding means is embodied at least according to one of claims 3 or 4 and on its side remote from the phase conductor (207) one of the holding limbs (219) exhibits a fastening element (232) embodied according to one of claims 6 to 8.

14. Mounting (216) according to claim 13, **characterised in that** on its side facing the phase conductor (207) in the region of the fastening element (232) the holding limb (219) exhibits a stiffening, in particular a protrusion (246).

15. Power transmission system for transmitting electrical power between a contact line (8) and an electrical consumer moveable along the contact line (8) with at least one data conductor (14; 114) guided along the contact line (8) and at least one antenna (13; 113) arranged on the consumer, **characterised in that** a multiplicity of mountings (16, 16', 16"; 116; 216) according to one of claims 1 to 14 arranged on the contact line (8) and spaced apart in the longitudinal direction (L) thereof hold the data conductor (14; 114) a distance from the contact line (8).

16. Power transmission system according to claim 15, **characterised in that** the mountings (16, 16', 16"; 116; 216) hold the data conductor (14; 114) an essentially constant horizontal and/or vertical distance from the contact line (8).

17. Power transmission system according to one of claims 15 or 16, **characterised in that** the current collector (2; 2"") is assigned to the individual phase conductor (7; 107"").

18. Data transmission system for contactless local data transmission between at least one data conductor (14; 114) guided along a contact line (8) and at least one antenna (13; 113) arranged on an electrical consumer moveable along the contact line (8), **characterised in that** it exhibits a multiplicity of mountings (16, 16', 16"; 116; 216) according to one of claims 1 to 14 for holding the data conductor (14; 114) a constant distance from a phase conductor (7) of the contact line (8).

## Revendications

1. Attache (16 ; 116 ; 216) pour un conducteur de données (14 ; 114) sur un faisceau de conducteurs (7 ; 117 ; 207) d'une ligne de contact (8) avec un moyen de retenue adapté à un contour extérieur du faisceau de conducteurs (7 ; 117 ; 207) pour la fixation de l'attache (16 ; 116 ; 216) sur le faisceau de conducteurs (7 ; 117 ; 207) et un moyen de fixation pour la fixation du conducteur de données (14 ; 114) sur l'attache (16 ; 116 ; 216) à distance par rapport au faisceau de conducteurs (7 ; 117 ; 207).

2. Attache (16 ; 116 ; 216) selon la revendication 1, **caractérisée en ce que** le moyen de retenue présente un dispositif de fixation (23) pour la fixation de l'attache (16 ; 116 ; 216) sur le faisceau de conducteurs (7 ; 117 ; 207).

3. Attache (16 ; 116 ; 216) selon la revendication 1 ou 2, **caractérisée en ce que** le moyen de retenue présente, pour enserrer le faisceau de conducteurs (7), des branches de maintien (19, 19' ; 219) situées en vis-à-vis les unes des autres en partant d'une partie médiane (18) avec des moyens d'encliquetage (20, 20', 21, 21') sur leurs extrémités libres.

4. Attache (16 ; 116 ; 216) selon la revendication 3, **caractérisée en ce que** les moyens d'encliquetage (20, 20', 21, 21') sont des ergots d'encliquetage (20, 20') orientés vers la partie médiane(18), tournés les uns vers les autres, avec des rainures d'encliquetage (21, 21').

5. Attache (16 ; 116 ; 216) selon l'une des revendications 3 ou 4, **caractérisée en ce que**, dans la partie médiane (18), sur l'attache (16 ; 216), une tôle de serrage (24) avec une partie de serrage (25) est disposée, laquelle peut se mouvoir en direction des moyens d'encliquetage (20, 20', 21, 21') à l'aide d'une vis de serrage (28) disposée sur l'attache (16 ; 116 ; 216).

6. Attache (16 ; 116 ; 216) selon l'une des revendications précédentes, **caractérisée en ce que** le moyen de fixation présente un logement (32 ; 232) avec un espace de logement adapté au contour extérieur du conducteur de données (14 ; 114) ou à un profilé de conducteur de données (15) entourant le conducteur de données (14 ; 114).

7. Attache (16 ; 116 ; 216) selon la revendication 6, **caractérisée en ce que**, sur un côté ouvert pour la mise en place du conducteur de données (14 ; 114) ou du profilé de conducteur de données (15) de l'espace de logement, on prévoit des crochets d'encliquetage (33, 33') pour l'encliquetage et le maintien du conducteur de données (14) ou du profilé du conducteur de données (15).

8. Attache (16 ; 116 ; 216) selon la revendication 7 **caractérisée en ce que**, sur un côté situé en vis-à-vis du côté ouvert de l'espace de logement, on prévoit au moins une vis de fixation (34) passant à travers l'attache (16 ; 116 ; 216) pour la fixation du conducteur de données (14 ; 114) ou du profilé de conducteur de données (15) sur les crochets d'encliquetage (33, 33').

9. Attache (16 ; 116 ; 216) selon l'une des revendications 6 à 8, **caractérisée en ce que** le conducteur de données (14 ; 114) ou le profilé de conducteur de données (15) présente des butées (38, 38') pour reposer contre les crochets d'encliquetage (33, 33').

10. Attache (16 ; 116 ; 216) selon l'une des revendications 6 à 9, **caractérisée en ce que** le profilé de conducteur de données (15) se compose de deux moitiés de profilé (35, 35') pouvant s'encliqueter l'une avec l'autre, oblongues, entourant partiellement le conducteur de données (14 ; 114).

11. Attache (16 ; 116) selon l'une des revendications 1 à 10, **caractérisée en ce qu'**elle présente un bras (30) qui garde le moyen de fixation à une distance invariable par rapport au moyen de retenue.

12. Attache (216) selon l'une des revendications 1 à 10 précédentes, **caractérisée en ce que** le moyen de fixation (232) est disposé sur un côté tournant le dos au faisceau de conducteurs (207), directement au niveau du moyen de retenue.

13. Attache (216) selon la revendication 12, **caractérisée en ce que** l'attache est réalisée selon l'une au moins des revendications 3 ou 4 et **en ce que** l'une des branches de maintien (219) présente, sur son côté tournant le dos au faisceau de conducteurs (207), un élément de fixation (232) réalisé selon l'une des revendications 6 à 8.

14. Attache (216) selon la revendication 13, **caractérisée en ce que** la branche de maintien (219) présente, sur son côté tourné vers le faisceau de conducteurs (207), dans la zone de l'élément de fixation (232), un renforcement, en particulier une nervure (246).

15. Système de transmission d'énergie pour la transmission d'énergie électrique entre une ligne de contact (8) et un consommateur électrique pouvant se déplacer le long de la ligne de contact (8) avec au moins un conducteur de données (14 ; 114) guidé le long de la ligne de contact (8) et au moins une antenne (13 ; 113) disposée sur le consommateur, **caractérisé en ce qu'**une pluralité d'attaches (16, 16', 16'' ; 116 ; 216) selon l'une des revendications 1 à 14 disposées de manière espacée les unes des autres sur la ligne de contact (8) dans le sens de la longueur (L) de celle-ci maintiennent le conducteur de données (14 ; 114) à distance par rapport à la ligne de contact (8).

16. Système de transmission d'énergie selon la revendication 15, **caractérisé en ce que** les fixations (16, 16', 16'' ; 116 ; 216) maintiennent le conducteur de données (14 ; 114) à une distance horizontale et/ou verticale sensiblement invariable par rapport à la ligne de contact (8).

17. Système de transmission d'énergie selon l'une des revendications 15 ou 16, **caractérisé en ce que** le récepteur de courant (2 ; 2'''') est associé au faisceau de conducteurs (7 ; 107'''') individuel.

18. Système de transmission de données pour la transmission de données locale sans contact entre au moins un conducteur de données (14 ; 114) guidé le long d'une ligne de contact (8) et au moins une antenne (13 ; 113) disposée sur un consommateur électrique pouvant se déplacer le long de la ligne de contact (8), **caractérisé en ce qu'**il présente une pluralité d'attaches (16, 16', 16'' ; 116 ; 216) selon l'une des revendications 1 à 14 pour maintenir le conducteur de données (14 ; 114) à une distance invariable par rapport à un faisceau de conducteurs (7) de la ligne de contact (8).
